(19) 

Europäisches Patentamt
European Patent Office
Office européen des brevets

(11) **EP 4 746 545 A1**

(12) **EUROPEAN PATENT APPLICATION**
published in accordance with Art. 153(4) EPC

(43) Date of publication:
**20.05.2026 Bulletin 2026/21**

(21) Application number: **24850566.1**

(22) Date of filing: **10.04.2024**

(51) International Patent Classification (IPC):
**H04W 64/00** (2009.01)

(52) Cooperative Patent Classification (CPC):
**H04W 4/70; H04W 24/10; H04W 64/00**

(86) International application number:
**PCT/CN2024/087079**

(87) International publication number:
**WO 2025/030909 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.08.2023 CN 202311012219**

(71) Applicant: **Huawei Technologies Co., Ltd.
Shenzhen, Guangdong 518129 (CN)**

(72) Inventors:
- **LI, Jun
  Shenzhen, Guangdong 518129 (CN)**
- **LI, Chao
  Shenzhen, Guangdong 518129 (CN)**

(74) Representative: **Gill Jennings & Every LLP
The Broadgate Tower
20 Primrose Street
London EC2A 2ES (GB)**

(54) **POSITIONING MEASUREMENT INFORMATION REPORTING METHODS AND APPARATUS**

(57) A positioning measurement information reporting method and an apparatus are provided, and are applied to the field of wireless communication technologies. The method includes: A first terminal device determines first positioning measurement information and first information, and sends the first positioning measurement information and the first information. The first information indicates an association between at least one antenna reference point and at least one sidelink positioning reference signal sent via the at least one antenna reference point, and the at least one antenna reference point is an antenna reference point on the first terminal device.

FIG. 6

**Description**

CROSS-REFERENCE TO RELATED APPLICATIONS

This application claims priority to Chinese Patent Application No. 202311012219.9, filed with the China National Intellectual Property Administration on August 10, 2023 and entitled "POSITIONING MEASUREMENT INFORMATION REPORTING METHOD AND APPARATUS", which is incorporated herein by reference in its entirety.

TECHNICAL FIELD

Embodiments of this application relate to the field of wireless communication, and in particular, to a positioning measurement information reporting method and an apparatus.

BACKGROUND

In a 5th generation communication technology (5th generation mobile communication technology, 5G), a terminal device (user equipment, UE, also referred to as user device) may obtain a reference signal time difference (reference signal time difference, RSTD) between a plurality of cells or a plurality of transmission points by measuring positioning reference signals (positioning reference signals, PRSs) sent via the plurality of cells or the plurality of transmission points, and sends measurement results to a network side for positioning.

Currently, standardization work is underway for sidelink (Sidelink, SL) positioning technologies of 5G systems. With evolution of technologies, the terminal device may have a plurality of antenna reference points (antenna reference points, ARPs), and may receive/send a sidelink positioning reference signal (sidelink positioning reference signal, SL-PRS) via different ARPs. Therefore, how to report measurement results of different ARPs, implement reporting of a measurement report (measurement report) per ARP (per ARP), and help a device performing positioning resolving determine matched positioning measurement results for positioning is a technical problem that needs to be resolved currently.

SUMMARY

Embodiments of this application provide a positioning measurement information reporting method and an apparatus, to implement reporting of positioning measurement information, and help a device that performs positioning resolving determine matched positioning measurement information.

According to a first aspect, a positioning measurement information reporting method is provided. The method may be applied to a first terminal device. The first terminal device may receive/send a sidelink positioning reference signal, and may obtain positioning measurement information by measuring the sidelink positioning reference signal.

The method includes: determining first positioning measurement information and first information, and sending the first positioning measurement information and the first information. The first information indicates an association between at least one antenna reference point and at least one sidelink positioning reference signal sent via the at least one antenna reference point, and the at least one antenna reference point is an antenna reference point on the first terminal device.

For example, a first antenna reference point on the first terminal device is for sending a first sidelink positioning reference signal. The first information sent by the first terminal device may be understood as indicating an association between the first antenna reference point on the first terminal device and the first sidelink positioning reference signal.

In the foregoing implementation, for positioning measurement and reporting based on an antenna reference point level, in addition to reporting the positioning measurement information, a terminal device may further report the first information. The first information may indicate the association between the at least one antenna reference point on the first terminal device and the at least one sidelink positioning reference signal sent via the at least one antenna reference point, so that a device that performs positioning resolving may perform matching on positioning measurement results reported by terminal devices, to select a positioning measurement result that meets an RTT positioning principle for positioning resolving. In this way, a problem of a positioning error or a positioning failure caused by a measurement result matching error can be avoided.

According to a second aspect, a positioning measurement information reporting method is provided. The method may be applied to a device that performs positioning resolving. The method may include: receiving first positioning measurement information and first information that are sent by a first terminal device, and performing positioning based on the first positioning measurement information and the first information. The first information indicates an association between at least one antenna reference point and at least one sidelink positioning reference signal sent via the at least one antenna reference point, and the at least one antenna reference point is an antenna reference point on the first terminal device.

In a possible implementation, the at least one antenna reference point includes a first antenna reference point, the first positioning measurement information is obtained by the first terminal device by measuring a second sidelink positioning reference signal, and the second sidelink positioning reference signal is sent by a second terminal device. The method further includes: receiving second positioning measurement information and second information from the second terminal device, where the second information indicates an association between at least one antenna reference point on the second terminal device and at least one sidelink positioning reference signal sent via the at least one antenna reference point, the at least one antenna reference point includes a second antenna reference point, the at least one sidelink positioning reference signal includes the second sidelink positioning reference signal sent via the second antenna reference point, and the second positioning measurement information is obtained by the second terminal device by measuring a first sidelink positioning reference signal; determining, based on the first positioning measurement information, the first information, the second positioning measurement information, and the second information, that the first positioning measurement information matches the second positioning measurement information; and performing positioning based on the first positioning measurement information and the second positioning measurement information.

According to the first aspect and the second aspect, in a possible implementation, the first positioning measurement information includes a receive-transmit time difference obtained by the first terminal device by measuring the second positioning reference signal. Optionally, the first positioning measurement information further includes an identifier of an antenna reference point that is on the first terminal device and that is for receiving the second positioning reference signal.

According to the first aspect and the second aspect, in a possible implementation, the association between the at least one antenna reference point and the at least one sidelink positioning reference signal sent via the at least one antenna reference point includes: an association between an identifier of the at least one antenna reference point and a resource identifier of the at least one sidelink positioning reference signal.

According to the first aspect and the second aspect, in a possible implementation, the identifier of the at least one antenna reference point and the resource identifier of the at least one sidelink positioning reference signal are included in the first information.

According to the first aspect and the second aspect, in a possible implementation, the association between the at least one antenna reference point and the at least one sidelink positioning reference signal sent via the at least one antenna reference point includes: an association between an identifier of the at least one antenna reference point and a timestamp of the at least one sidelink positioning reference signal. Optionally, the timestamp of the at least one sidelink positioning reference signal and the identifier of the at least one antenna reference point are included in the first information. Optionally, the timestamp of the at least one sidelink positioning reference signal is indication information of a time domain unit in which the at least one sidelink positioning reference signal is located.

According to the first aspect and the second aspect, in a possible implementation, the determining the first positioning measurement information and the first information includes: determining the first information before the second sidelink positioning reference signal is received from the second terminal device; and determining the first positioning measurement information after the second sidelink positioning reference signal is received, where the first positioning measurement information is obtained by measuring the second sidelink positioning reference signal. The sending the first positioning measurement information and the first information includes: sending the first information before sending the first positioning measurement information.

According to the first aspect and the second aspect, in a possible implementation, the sending the first positioning measurement information and the first information includes: sending a first positioning measurement report, where the first positioning measurement report includes the first positioning measurement information and the first information.

According to a third aspect, a positioning measurement information reporting method is provided. The method may be applied to a first terminal device. The first terminal device may receive/send a sidelink positioning reference signal, and may obtain a positioning measurement result by measuring the sidelink positioning reference signal.

The method includes: receiving second information, where the second information indicates an association between at least one antenna reference point and at least one sidelink positioning reference signal sent via the at least one antenna reference point, and the at least one antenna reference point is an antenna reference point on a second terminal device, where the at least one antenna reference point includes a second antenna reference point, and the at least one sidelink positioning reference signal includes a second sidelink positioning reference signal sent via the second antenna reference point; generating a first positioning measurement report based on the second information and first positioning measurement information, where the first positioning measurement information is obtained by the first terminal device by measuring the second sidelink positioning reference signal, where the first positioning measurement report includes the first positioning measurement information, and the first positioning measurement report indicates an association between the second antenna reference point and the second sidelink positioning reference signal; and sending the first positioning measurement report.

In the foregoing implementation, for positioning measurement and positioning measurement information reporting based on an antenna reference point level, because a positioning measurement report includes information that can help perform matching on positioning measurement results, a device configured to perform positioning resolving can perform matching on positioning measurement reports reported by terminal devices. In this way, a problem of a positioning error or a positioning failure caused by a measurement result matching error can be avoided.

According to a fourth aspect, a positioning measurement information reporting method is provided. The method may be applied to a device that performs positioning resolving. The method includes: receiving a first positioning measurement report from a first terminal device, where the first positioning measurement report includes first positioning measurement information, the first positioning measurement information is obtained by the first terminal device by measuring a second sidelink positioning reference signal, and the first positioning measurement report indicates an association between a second antenna reference point and the second sidelink positioning reference signal, where the second antenna reference point is an antenna reference point that is on a second terminal device and that is for sending the second sidelink positioning reference signal; and performing positioning based on the first positioning measurement report.

In a possible implementation, the method further includes: receiving a second positioning measurement report from the second terminal device, where the second positioning measurement report includes second positioning measurement information, the second positioning measurement information is obtained by the second terminal device by measuring a first sidelink positioning reference signal, and the second positioning measurement report indicates an association between a first antenna reference point and the first sidelink positioning reference signal, where the first antenna reference point is an antenna reference point that is on the first terminal device and that is for sending the first sidelink positioning reference signal. The performing positioning based on the first positioning measurement report includes: determining that the first positioning measurement report matches the second positioning measurement report; and performing positioning based on the first positioning measurement report and the second positioning measurement report.

According to the third aspect and the fourth aspect, in a possible implementation, the first positioning measurement report includes an identifier of the second antenna reference point.

According to the third aspect and the fourth aspect, in a possible implementation, the association between the at least one antenna reference point and the at least one sidelink positioning reference signal sent via the at least one antenna reference point includes: an association between an identifier of the at least one antenna reference point and a resource identifier of the at least one sidelink positioning reference signal.

According to the third aspect and the fourth aspect, in a possible implementation, the identifier of the at least one antenna reference point and the resource identifier of the at least one sidelink positioning reference signal are included in first information.

According to the third aspect and the fourth aspect, in a possible implementation, the association between the at least one antenna reference point and the at least one sidelink positioning reference signal sent via the at least one antenna reference point includes: an association between an identifier of the at least one antenna reference point and a timestamp of the at least one sidelink positioning reference signal. Optionally, the timestamp of the at least one sidelink positioning reference signal and the identifier of the at least one antenna reference point are included in first information. Optionally, the timestamp of the at least one sidelink positioning reference signal is indication information of a time domain unit in which the at least one sidelink positioning reference signal is located.

According to a fifth aspect, a communication apparatus is provided, including a module configured to perform the method according to any one of the first aspect, a module configured to perform the method according to any one of the second aspect, a module configured to perform the method according to any one of the third aspect, or a module configured to perform the method according to any one of the fourth aspect.

According to a sixth aspect, a communication apparatus is provided, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the first aspect, the method according to any one of the second aspect, the method according to any one of the third aspect, or the method according to any one of the fourth aspect through a logic circuit or by executing code instructions.

According to a seventh aspect, a computer-readable storage medium is provided, where the storage medium stores a computer program or instructions. When the computer program or the instructions are executed by a communication apparatus, the method according to any one of the first aspect is implemented, the method according to any one of the second aspect is implemented, the method according to any one of the third aspect is implemented, or the method according to any one of the fourth aspect is implemented.

According to an eighth aspect, a chip system is provided, where the chip system includes a chip, and the chip is coupled to a memory, and is configured to read and execute program instructions stored in the memory, to implement the method according to any one of the first aspect, the second aspect, the third aspect, or the fourth aspect.

According to a ninth aspect, a computer program product is provided. When the computer program product is invoked by a computer, the computer is enabled to perform the method according to any one of the first aspect, the second aspect, the third aspect, or the fourth aspect.

BRIEF DESCRIPTION OF DRAWINGS

FIG. 1 is a diagram of a principle of a round-trip time positioning technology;
FIG. 2 is a diagram of positioning measurement in a sidelink communication scenario;
FIG. 3 is a diagram of an architecture of a communication system to which an embodiment of this application is applicable;
FIG. 4 is a diagram of another architecture of a communication system to which an embodiment of this application is applicable;
FIG. 5 is a diagram of another architecture of a communication system to which an embodiment of this application is applicable;
FIG. 6 is a diagram of a positioning measurement information reporting procedure according to an embodiment of this application;
FIG. 7 is a diagram of separately sending positioning measurement information and first information by UE 1 and UE 2 according to an embodiment of this application;
FIG. 8 is a diagram of another positioning measurement information reporting procedure according to an embodiment of this application;
FIG. 9 is a diagram of a structure of a communication apparatus according to an embodiment of this application; and
FIG. 10 is a diagram of a structure of another communication apparatus according to an embodiment of this application.

DESCRIPTION OF EMBODIMENTS

In a positioning technology based on a "triangulation positioning method", for a to-be-positioned terminal device, a location of the terminal device can be calculated provided that distances between the terminal device and three reference points whose locations are known are obtained.

The distance between the terminal device and the reference point may be obtained through calculation based on a round-trip time (round-trip time, RTT) positioning technology. An RTT positioning principle is a positioning technology based on echo signal ranging. In this technology, a transmission speed of a radio signal in space is used to calculate a distance by measuring round-trip time of the signal from a transmitter to a receiver.

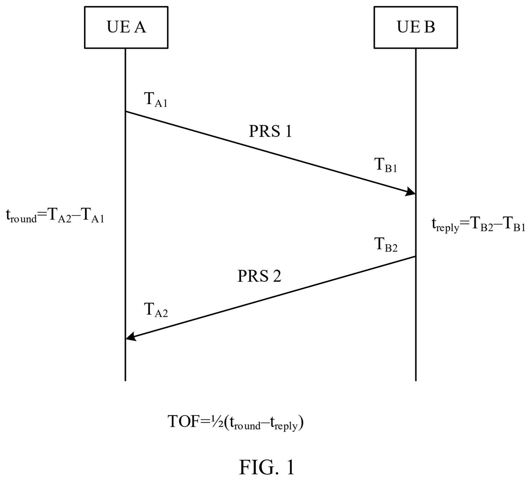

In the RTT positioning technology, two devices may send/receive a positioning reference signal to/from each other, to obtain round-trip transmission time without clock synchronization between the devices. FIG. 1 shows an example of a principle of an RTT positioning technology. As shown in FIG. 1, UE A sends a positioning reference signal PRS 1 to UE B at a moment $T_{A1}$, the UE B receives the positioning reference signal PRS 1 at a moment $T_{A1}$, the UE B sends a positioning reference signal PRS 2 to the UE A at a moment $T_{B2}$, and the UE A receives the positioning reference signal PRS 2 at a moment $T_{A2}$. A positioning reference signal receive-transmit time difference obtained by the UE A through measurement is represented as $t_{round} = T_{A2} - T_{A1}$, a positioning reference signal receive-transmit time difference obtained by the UE B through measurement is represented as $t_{reply} = T_{B2} - T_{B1}$, and time of flight between the UE A and the UE B is:

$$\text{TOF} = \frac{1}{2}\left(t_{round} - t_{reply}\right)$$

A distance between the two devices may be obtained by multiplying the TOF by the speed of light.

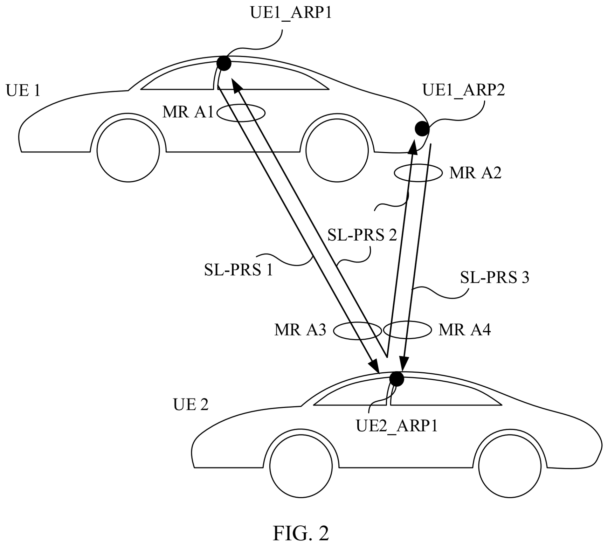

According to the principle of the RTT positioning technology shown in FIG. 1, in a diagram of a sidelink communication system, currently, a positioning measurement report reported by a terminal device mainly includes a time difference associated with a received sidelink positioning reference signal, and the time difference may also be referred to as a receive-transmit time difference. The time difference is a time difference between time of receiving the sidelink positioning reference signal by the terminal device and time of sending the sidelink positioning reference signal by the terminal device. Further, the positioning measurement report may further include an identifier of an ARP for receiving the sidelink positioning reference signal. FIG. 2 is an example of a diagram of positioning measurement and positioning measurement information reporting in a sidelink communication scenario.

As shown in FIG. 2, UE 1 has two ARPs, which are respectively represented as a UE1_ARP1 and a UE1_ARP2, and UE 2 has one ARP, which is represented as a UE2_ARP1. The UE 1 sends a sidelink positioning reference signal SL-PRS 1 via the UE1_ARP1, and sends a sidelink positioning reference signal SL-PRS 3 via the UE1_ARP2, and the SL-PRS 1 and the SL-PRS 3 are received via the UE2_APR1 on the UE 2. The UE 2 sends a sidelink positioning reference signal SL-PRS 2 via the UE2_ARP1, and the SL-PRS 2 is received via the UE1_APR1 and the UE1_ARP2 on the UE 1.

The UE 1 may obtain, through measurement, a time difference Rx_Tx measurement 1 between receiving the SL-PRS 2 via the UE1_APR1 and sending the SL-PRS 1 via the UE1_APR1, and generate the following positioning measurement report A1 (refer to an MR A1 in FIG. 2):

$$Rx\_Tx \text{ measurement } 1 + UE1\_ARP1 \text{ ID}\dots\dots\dots\dots\dots\dots(A1)$$

The UE 1 may further obtain, through measurement, a time difference Rx_Tx measurement 2 between receiving the SL-PRS 2 via the UE1_APR2 and sending the SL-PRS 3 via the UE1_APR2, and generate the following positioning measurement report A2 (refer to an MR A2 in FIG. 2):

$$Rx\_Tx \text{ measurement } 2 + UE1\_ARP2 \text{ ID}\dots\dots\dots\dots\dots\dots(A2)$$

The UE 2 may obtain, through measurement, a time difference Rx_Tx measurement 3 between receiving the SL-PRS 1 via the UE2_APR1 and sending the SL-PRS 2 via the UE2_APR1, and generate the following positioning measurement report A3 (refer to an MR A3 in FIG. 2):

$$Rx\_Tx \text{ measurement } 3 + UE2\_ARP1 \text{ ID}\dots\dots\dots\dots\dots\dots(A3)$$

The UE 2 may further obtain, through measurement, a time difference Rx_Tx measurement 4 between receiving the SL-PRS 3 via the UE2_APR1 and sending the SL-PRS 2 via the UE2_APR1, and generate the following positioning measurement report A4 (refer to an MR A4 in FIG. 2):

$$Rx\_Tx \text{ measurement } 4 + UE2\_ARP1 \text{ ID}\dots\dots\dots\dots\dots\dots(A4)$$

The UE1_ARP1 ID represents an identifier of the UE1_ARP1 on the UE 1, and by analogy, the UE1_ARP2 ID represents an identifier of the UE1_ARP2 on the UE 1, and the UE2_APR1 represents an identifier of the UE2_ARP1 on the UE 2.

The UE 1 and the UE 2 may send the positioning measurement reports to a device that performs positioning resolving. For example, the device that performs positioning resolving may be a location management function (location management function, LMF) or a terminal device.

As shown in FIG. 2, sidelink positioning reference signals associated with receive-transmit time differences in the positioning measurement report A1 reported by the UE 1 and the positioning measurement report A3 reported by the UE 2 are both the SL-PRS 1 and the SL-PRS 2, and may form a time difference parameter needed for RTT positioning calculation. Therefore, according to the principle of the RTT positioning technology, positioning resolving may be performed by using the positioning measurement report A1 reported by the UE 1 and the positioning measurement report A3 reported by the UE 2, to obtain a distance between the UE1_ARP1 and the UE2_ARP1. Similarly, sidelink positioning reference signals associated with receive-transmit time differences in the positioning measurement report A2 reported by the UE 1 and the positioning measurement report A4 reported by the UE 2 are both the SL-PRS 2 and the SL-PRS 3. According to the principle of the RTT positioning technology, positioning resolving may also be performed by using the positioning measurement report A2 reported by the UE 1 and the positioning measurement report A4 reported by the UE 2, to obtain a distance between the UE1_ARP2 and the UE2_ARP1.

Sidelink positioning reference signals associated with receive-transmit time differences in the positioning measurement report A1 reported by the UE 1 and the positioning measurement report A4 reported by the UE 2 are different, and cannot form a time difference parameter needed for RTT positioning calculation. Similarly, the positioning measurement report A2 reported by the UE 1 and the positioning measurement report A3 reported by the UE 2 also cannot be used for positioning resolving.

After the device side that performs positioning resolving receives the positioning measurement reports, how to determine a specific positioning measurement report reported by the UE 1 can match a specific positioning measurement report reported by the UE 2 to perform positioning resolving is a technical problem that needs to be resolved currently.

The foregoing uses an example in which the terminal device has only a small quantity of ARPs for description. When the terminal device has a larger quantity of ARPs and can send/receive a sidelink positioning reference signal via these APRs, the terminal device reports a larger quantity of positioning measurement reports. For the device that performs positioning resolving, how to accurately match positioning measurement reports reported by terminal devices is more important.

Therefore, embodiments of this application provide a positioning measurement information reporting method and a related apparatus to which the method is applied. In embodiments of this application, when reporting a positioning measurement result, in addition to reporting a receive-transmit time difference of the sidelink positioning reference signal, the terminal device may further report information used for positioning assistance (referred to as positioning assistance information in some embodiments below). The information may help the device configured to perform positioning determine matched positioning measurement results from positioning measurement results reported by a plurality of terminal devices, to perform positioning resolving according to the RTT positioning principle.

The following describes embodiments of this application in detail with reference to the accompanying drawings.

The technical solutions provided in embodiments of this application are mainly applicable to a wireless communication system. The wireless communication system may comply with a wireless communication standard of the 3rd generation partnership project (third generation partnership project, 3GPP). For example, the solutions provided in embodiments of this application may be applied to a 4th generation (4th generation, 4G) communication system, for example, a long term evolution (long term evolution, LTE) communication system, or may be applied to a 5th generation (5th generation, 5G) communication system, for example, a 5G new radio (new radio, NR) communication system, or applied to various future communication systems, for example, a 6th generation (6th generation, 6G) communication system. The technical solutions provided in embodiments of this application may alternatively comply with another wireless communication standard, for example, a wireless communication standard of the 802 series (for example, 802.11, 802.15, or 802.20) of the Institute of Electrical and Electronics Engineers (Institute of Electrical and Electronics Engineers, IEEE).

The method provided in embodiments of this application may be further applied to a Bluetooth system, a Wi-Fi system, a LoRa system, or a vehicle to everything (vehicle to everything, V2X) system. The method provided in embodiments of this application may be further applied to a satellite communication system. The satellite communication system may be integrated with the foregoing communication system.

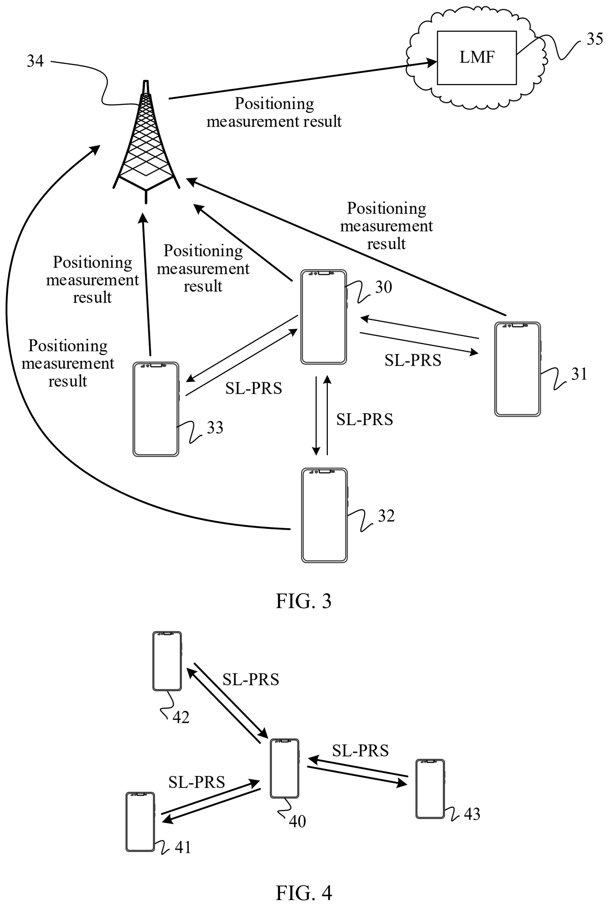

FIG. 3 is a diagram of an architecture of a communication system to which an embodiment of this application is applicable. As shown in FIG. 3, a terminal device 30 is a to-be-positioned terminal device, a terminal device 31, a terminal device 32, and a terminal device 33 are anchor terminal devices used as reference points, and locations of the anchor terminal devices are known to an LMF entity in a core network. In a signal coverage area of a network device 34, the terminal device 30, the terminal device 31, the terminal device 32, and the terminal device 33 may send sidelink positioning reference signals under control of the network device 34, and send positioning measurement results to an LMF 35 via the network device 34. The LMF 35 may position the terminal device 30 based on the positioning measurement results reported by the terminal devices.

FIG. 4 is a diagram of another architecture of a communication system to which an embodiment of this application is applicable. As shown in FIG. 4, a terminal device 40 is a to-be-positioned terminal device, direct communication connections are established between the terminal device 40, a terminal device 41, a terminal device 42, and a terminal device 43, and none of these terminal devices establishes a connection to a network device. The terminal device 40 and each of the terminal device 41, the terminal device 42, and the terminal device 43 may send a sidelink positioning reference signal to each other, and may obtain a positioning measurement result. One of the foregoing terminal devices may be used as a device that performs positioning resolving, and a location of the terminal device 40 is determined based on positioning measurement results of the terminal devices. For example, the terminal device 40 is used as the device that performs positioning resolving. The terminal device 41, the terminal device 42, and the terminal device 43 may send positioning measurement results to the terminal device 40, and the terminal device 40 may determine the location of the terminal device 40 based on the received positioning measurement results and a positioning measurement result of the terminal device 40. Locations of the terminal device 41, the terminal device 42, and the terminal device 43 are known to the terminal device 40.

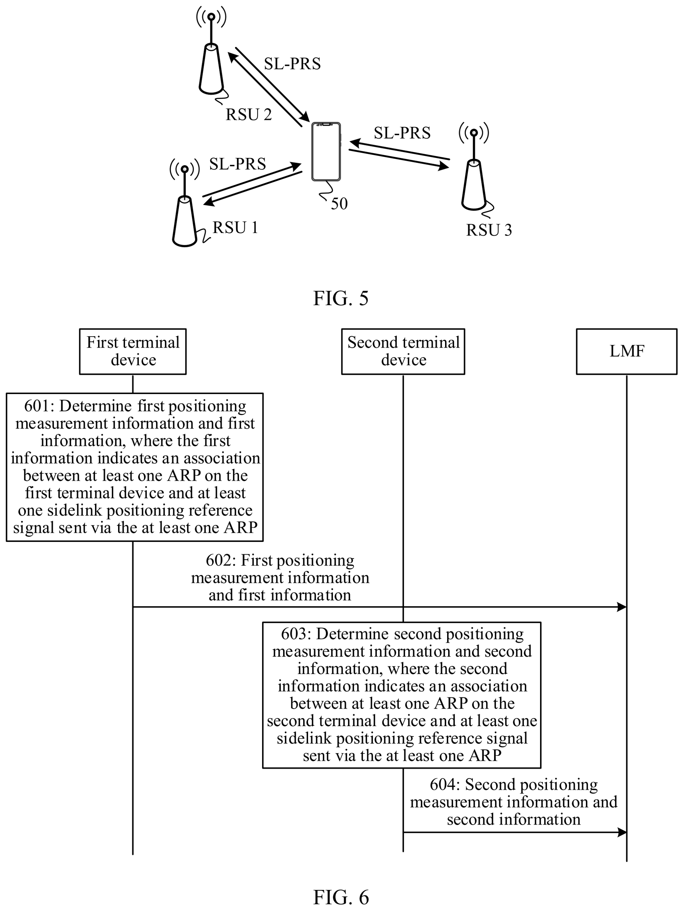

FIG. 5 is a diagram of another architecture of a communication system to which an embodiment of this application is applicable. FIG. 5 shows that a terminal device 50 implements positioning by receiving sidelink positioning reference signals sent by a plurality of roadside units (roadside units, RSUs). The RSU is a roadside unit deployed on a roadside and meets a sidelink communication/positioning-related protocol. The RSU is a device or an apparatus that can provide a wireless communication function for a terminal. The RSU may be a roadside station, an access point, a sidelink device, or the like in various forms. As shown in FIG. 5, the terminal device 50 is a to-be-positioned terminal device. The terminal device 50 and each of an RSU 1, an RSU 2, and an RSU 3 may send a sidelink positioning reference signal to each other, and may obtain a positioning measurement result. For example, the terminal device 50 is used as a device that performs positioning resolving. The RSU 1, the RSU 2, and the RSU 3 may send positioning measurement results to the terminal device 50, and the terminal device 50 may determine a location of the terminal device 50 based on the received positioning measurement results and a positioning measurement result of the terminal device 50. Locations of the RSU 1, the RSU 2, and the RSU 3 are known to the terminal device 50.

It may be understood that sidelink positioning scenarios shown in FIG. 3, FIG. 4, and FIG. 5 are merely some possible examples. In another possible sidelink positioning scenario, more terminal devices or another type of device may be included. This is not limited in embodiments of this application.

The terminal device (for example, the terminal device in FIG. 3, FIG. 4, or FIG. 5, and a first terminal device and a second terminal device in the following) in embodiments of this application may include a device that provides voice and/or data connectivity for a user, for example, may include a handheld device having a wireless connection function, or a processing device connected to a wireless modem. The terminal may communicate with a core network through a radio access network (radio access network, RAN), and exchange voice and/or data with the RAN. The terminal may include user equipment (user equipment, UE), a wireless terminal, a mobile terminal, a device-to-device (device-to-device, D2D) communication terminal, a vehicle-to-everything (vehicle-to-everything, V2X) terminal, a machine-to-machine/machine-type communication (machine-to-machine/machine-type communication, M2M/MTC) terminal, an internet of things (internet of things, IoT) terminal, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), an RSU, a user device (user device), or the like. For example, the terminal may include a mobile phone (or referred to as a "cellular" phone), a computer having a mobile terminal, or a portable, pocket-sized, handheld, or computer built-in mobile apparatus. For example, the terminal may be a device like a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal may alternatively be a tablet computer or a computer having a wireless transceiver function. The terminal may alternatively be a virtual reality (virtual reality, VR) terminal, an augmented reality (augmented reality, AR) terminal, a wireless terminal in industrial control, a wireless terminal in self driving, a wireless terminal in telemedicine, a wireless terminal in a smart grid, a wireless terminal in a smart city (smart city), a wireless terminal in a smart home (smart home), or the like. The terminal may further include a limited device, for example, a device with low power consumption, a device with a limited storage capability, or a device with a limited computing capability. For example, the terminal includes an information sensing device like a barcode, radio frequency identification (radio frequency identification, RFID), a sensor, a global positioning system (global positioning system, GPS), or a laser scanner.

The network device in embodiments of this application is an access network (access network, AN) device (for example, a base station) and may be a device that communicates with a wireless terminal over an air interface via one or more cells in an access network. For example, the access network device may include an evolved NodeB (NodeB, eNB, or e-NodeB, evolved NodeB) in a long term evolution (long term evolution, LTE) system or a long term evolution-advanced (long term evolution-advanced, LTE-A) system, may include a next generation NodeB (next generation NodeB, gNB) in a 5G NR system, or may include a central unit (central unit, CU) and a distributed unit (distributed unit, DU) in a cloud radio access network (cloud radio access network, Cloud RAN) system. This is not limited in embodiments of this application. The eNB may include a macro base station, a micro base station (also referred to as a small cell), a relay station, an access point, a wearable device, and a vehicle-mounted device in various forms. The eNB may alternatively be a transmission and reception point (transmission and reception Point, TRP). The gNB may include a macro base station, a micro base station (also referred to as a small cell), a relay station, an access point, a wearable device, and a vehicle-mounted device in various forms. The gNB may alternatively be a TRP or a transmission measurement function (transmission measurement function, TMF). The gNB may include a CU and a DU that are integrated into the gNB.

Based on the foregoing system architecture, the following uses the first terminal device and the second terminal device as an example to describe a process of performing transmission of a sidelink positioning reference signal between the first terminal device and the second terminal device, performing measurement based on the sidelink positioning reference signal to obtain positioning measurement information, and reporting the positioning measurement information. For example, the first terminal device and the second terminal device may be the two terminal devices in FIG. 3 or FIG. 4, or the terminal device and the one RSU in FIG. 5.

The method provided in embodiments of this application is described by using an example in which the method is performed by a terminal apparatus. The terminal apparatus in embodiments of this application may be a terminal device, or a chip, a unit, or a module in the terminal device, for example, may be any terminal device shown in FIG. 3, FIG. 4, or FIG. 5, or may be an RSU. Alternatively, the terminal apparatus may be a communication apparatus having a terminal function, or a chip, a unit, or a module inside a communication apparatus having a terminal function. For ease of understanding, in embodiments of this application, an example in which the terminal apparatus is a terminal device or a chip, a unit, or a module inside a terminal device, and a network apparatus is a network device or a chip, a unit, or a module inside a network device is used for description.

The positioning reference signal in the method provided in embodiments of this application may be a sidelink-based positioning reference signal (which may be referred to as the sidelink positioning reference signal).

In embodiments of this application, expressions such as "positioning measurement information" and "positioning measurement result" may be replaced with each other.

FIG. 6 is a diagram of a positioning measurement information reporting procedure according to an embodiment of this application.

In this embodiment of this application, a first terminal device has one or more antenna reference points (referred to as ARPs for short below), and a second terminal device has one or more ARPs. The first terminal device may send at least one sidelink positioning reference signal to the second terminal device via at least one ARP, or the second terminal device may send at least one sidelink positioning reference signal to the first terminal device via at least one ARP. For example, a first ARP on the first terminal device may be for sending a first sidelink positioning reference signal to the second terminal device, and a second ARP on the second terminal device may be for receiving the first sidelink positioning reference signal sent by the first terminal device. The second ARP on the second terminal device may be for sending a second sidelink positioning reference signal to the first terminal device, and the first ARP on the first terminal device may be for receiving the second sidelink positioning reference signal sent by the second terminal device. The first terminal device and the second terminal device may obtain positioning measurement information by measuring sidelink positioning reference signals.

As shown in FIG. 6, the procedure may include the following steps.

Step 601: The first terminal device determines first positioning measurement information and first information.

The first information indicates an association between at least one ARP and at least one sidelink positioning reference signal sent via the at least one ARP, and the at least one ARP is an ARP on the first terminal device. In other words, the first information may indicate an association between the one or more ARPs on the first terminal device and one or more positioning reference signals sent via the one or more ARPs. The first information may also be referred to as positioning assistance information.

In a possible implementation, the first information may be in a data structure like a list or a matrix, and the data structure indicates an association between an ARP on the first terminal device and a sidelink positioning reference signal sent via the ARP. It may be understood that the data structure used for the first information is not limited in this embodiment of this application.

The UE 1 in FIG. 2 is used as an example. First information determined by the UE 1 may be a list including a first entry and a second entry. For example, the list may be represented as {(UE1_ARP1, SL-PRS 1), (UE1_ARP2, SL-PRS 3)}. The entry (UE1_ARP1, SL-PRS 1) indicates that the UE1_ARP1 is associated with the SL-PRS 1, and the entry (UE1_ARP2, SL-PRS 3) indicates that the UE1_ARP2 is associated with the SL-PRS 3.

For another example, if the first terminal device includes an antenna reference point ARP 1, and the ARP 1 is for sending sidelink positioning reference signals SL-PRS 1 and SL-PRS 2, the first information may be in the following data structure: {(ARP 1, SL-PRS 1), (ARP 1, SL-PRS 2)}. (ARP 1, SL-PRS 1) indicates that the ARP 1 is associated with the SL-PRS 1, and (ARP 1, SL-PRS 2) indicates that the ARP 1 is associated with the SL-PRS 2.

For still another example, if the first terminal device includes an antenna reference point ARP 1, and the ARP 1 is for sending a sidelink positioning reference signal SL-PRS 1, the first information may be in the following data structure: {(ARP 1, SL-PRS 1)}. (ARP 1, SL-PRS 1) indicates that the ARP 1 is associated with the SL-PRS 1.

The foregoing is merely several possible examples. A quantity of antenna reference points on the first terminal device and a quantity of sidelink positioning reference signals that can be sent via one antenna reference point are not limited in this embodiment of this application.

In a possible implementation, the association between the ARP and the positioning reference signal may be represented in the following manner: an association between an identifier of the at least one ARP and a resource identifier of the at least one sidelink positioning reference signal sent via the at least one ARP. In other words, the association between the ARP and the positioning reference signal may be represented by an association between an identifier of the ARP and a resource identifier of the sidelink positioning reference signal. The first ARP on the first terminal device is used as an example. The association relationship may be represented as an association between an identifier of the first ARP and a resource identifier of one or more sidelink positioning reference signals sent via the first ARP. Optionally, the identifier of the first ARP and the resource identifier of the sidelink positioning reference signal sent via the first ARP may be included in the first information. Optionally, the association between the ARP and the sidelink positioning reference signal may be indicated by a data structure. For example, (an identifier of an ARP 1, a resource identifier of an SL-PRS 1) indicates an association between the ARP 1 and the SL-PRS 1 sent via the ARP 1.

A resource for the sidelink positioning reference signal includes a time-frequency resource for the sidelink positioning reference signal. The time-frequency resource for the sidelink positioning reference signal may be allocated by a network device, or may be selected by a terminal device from a candidate resource in a resource pool. Different resources for sidelink positioning reference signals may be distinguished by using resource identifiers. In other words, the resource identifiers may be used to distinguish between the sidelink positioning reference signals.

FIG. 2 is used as an example. First information corresponding to the UE1_ARP1 on the UE 1 may include an identifier of the UE1_ARP1 (represented as a UE1_ARP1 ID) and/or a resource identifier of the SL-PRS 1 (represented as an SL-PRS 1 resource ID). First information corresponding to the UE1_ARP2 on the UE 1 may include an identifier of the UE1_ARP2 (represented as a UE1_ARP2 ID) and/or a resource identifier of the SL-PRS 3 (represented as an SL-PRS 3 resource ID).

In another possible implementation, the association between the ARP and the positioning reference signal may be represented in the following manner: an association between an identifier of the at least one ARP and a timestamp of the at least one sidelink positioning reference signal sent via the at least one ARP. In other words, the association between the ARP and the positioning reference signal may be represented by an association between an identifier of the ARP and a timestamp of the sidelink positioning reference signal. The first ARP on the first terminal device is used as an example. The association relationship may be represented as an association between an identifier of the first ARP and a timestamp of one or more positioning reference signals sent via the first ARP. Optionally, the identifier of the first ARP and the timestamp of the at least one sidelink positioning reference signal sent via the first ARP may be included in the first information. Optionally, the association between the ARP and the sidelink positioning reference signal may be indicated by a data structure. For example, (an identifier of an ARP 1, a timestamp of an SL-PRS 1) indicates an association between the ARP 1 and the SL-PRS 1 sent via the ARP 1.

For example, the first terminal device sends the first sidelink positioning reference signal. For the first terminal device, the first terminal device is a transmit-end device of the first positioning reference signal, and a timestamp of the first positioning reference signal is a sending timestamp of the first positioning reference signal. In this embodiment of this application, the timestamp of the first positioning reference signal may be indication information of a time domain unit in which the first positioning reference signal is located. For example, the timestamp of the first positioning reference signal may be an index of a slot in which the first positioning reference signal is located. For the second terminal device, the second terminal device is a receive-end device of the first positioning reference signal. In the dimension of the time domain unit (for example, the slot), a delay between a sending moment and a receiving moment of the positioning reference signal does not exceed one time domain unit. Therefore, a time domain unit in which the second terminal device receives the first positioning reference signal and a time domain unit in which the first terminal device sends the first positioning reference signal are the same. It may be understood that, in the dimension of the time domain unit, a sending timestamp of the first positioning reference signal and a receiving timestamp of the first positioning reference signal are the same, and therefore are collectively referred to as the timestamp of the first positioning reference signal in this embodiment of this application.

FIG. 2 is used as an example. First information corresponding to the UE1_ARP1 on the UE 1 may include an identifier of the UE1_ARP1 (represented as a UE1_ARP1 ID) and/or a timestamp of the SL-PRS 1 (represented as an SL-PRS slot index 1). First information corresponding to the UE1_ARP2 on the UE 1 may include an identifier of the UE1_ARP2 (represented as a UE1_ARP2 ID) and/or a timestamp of the SL-PRS 3 (represented as an SL-PRS slot index 3).

In this embodiment of this application, the first positioning measurement information is obtained by the first terminal device by measuring the sidelink positioning reference signal, and the first positioning measurement information may include a receive-transmit time difference of the sidelink positioning reference signal.

In a possible implementation, for example, the first ARP on the first terminal device is for receiving a second positioning reference signal sent by the second terminal device, and the first ARP is for sending the first sidelink positioning reference signal. The first positioning measurement information determined by the first terminal device may include a receive-transmit time difference between sending of the first positioning reference signal and receiving of the second positioning reference signal. FIG. 2 is used as an example. The UE 1 may obtain, through measurement, a time difference Rx_Tx measurement 1 between time of receiving the SL-PRS 2 via the UE1_APR1 and time of sending the SL-PRS 1 via the UE1_APR1. The UE 1 may further obtain, through measurement, a time difference Rx_Tx measurement 2 between time of receiving the SL-PRS 2 via the UE1_APR2 and time of sending the SL-PRS 3 via the UE1_APR2.

Optionally, the first positioning measurement information determined by the first terminal device may further include an identifier of an ARP that is on the first terminal device and that is for receiving the second positioning reference signal. FIG. 2 is used as an example. Because the UE1_ARP1 on the UE 1 is for receiving the sidelink positioning reference signal SL-PRS 2, positioning measurement information corresponding to the UE1_ARP1 may include a UE2_APR1 ID. Because the UE1_ARP2 on the UE 1 is for receiving the sidelink positioning reference signal SL-PRS 2, positioning measurement information corresponding to the UE1_ARP2 may include the UE2_APR1 ID.

Optionally, the first positioning measurement information may further include a resource identifier of a positioning reference signal received by the first terminal device. FIG. 2 is used as an example. Because the UE1_ARP1 on the UE 1 is for receiving the SL-PRS 2, positioning measurement information corresponding to the UE1_ARP1 may include an SL-PRS 2 resource ID. Because the UE1_ARP2 on the UE 1 is also for receiving the SL-PRS 2, positioning measurement information corresponding to the UE1_ARP2 may also include the SL-PRS 2 resource ID.

Step 602: The first terminal device sends the first positioning measurement information and the first information that are determined in step 601.

In step 603 and step 604, the second terminal device may also determine second positioning measurement information and second information in the foregoing manner, and send the determined second positioning measurement information and second information to a device configured to perform positioning resolving.

The second information may also be referred to as positioning assistance information.

For example, in step 602, the second positioning measurement information determined by the second terminal device indicates an association between the at least one antenna reference point on the second terminal device and at least one sidelink positioning reference signal sent via the at least one antenna reference point. For example, the at least one antenna reference point includes a second antenna reference point, and the at least one sidelink positioning reference signal includes a second sidelink positioning reference signal sent via the second antenna reference point. The second information may indicate an association between the second antenna reference point and the second sidelink positioning reference signal.

For example, in step 602, that the first terminal device sends the first sidelink positioning reference signal is used as an example. The second positioning measurement information is obtained by the second terminal device by measuring the first sidelink positioning reference signal.

In a possible implementation, the first positioning measurement information and the first information may be separately sent. For example, the first positioning measurement information may be sent by using a positioning measurement report, and the first information may be sent by using another message.

In a possible implementation, the first information may be sent before the first positioning measurement report, or may be sent before positioning measurement starts. For example, when obtaining a time-frequency resource for the first positioning reference signal, the first terminal device may determine a specific ARP for sending a positioning reference signal corresponding to a specific resource identifier (in other words, an association between an identifier of the ARP and the resource identifier of the positioning reference signal has been obtained in this case), or may determine a specific ARP and a specific slot for sending the positioning reference signal (in other words, an association between an identifier of the ARP and a timestamp of the positioning reference signal has been obtained in this case). Therefore, the first terminal device may send the first information before the positioning measurement starts or before the positioning measurement report is sent. For example, when configuring the sidelink positioning reference signal, the first terminal device may send the first information by using an existing message, to reduce signaling overheads.

Optionally, the time-frequency resource for the first positioning reference signal may be configured by the network device for the first terminal device, or may be selected by the first terminal device from the candidate resource in the resource pool. This is not limited in this embodiment of this application.

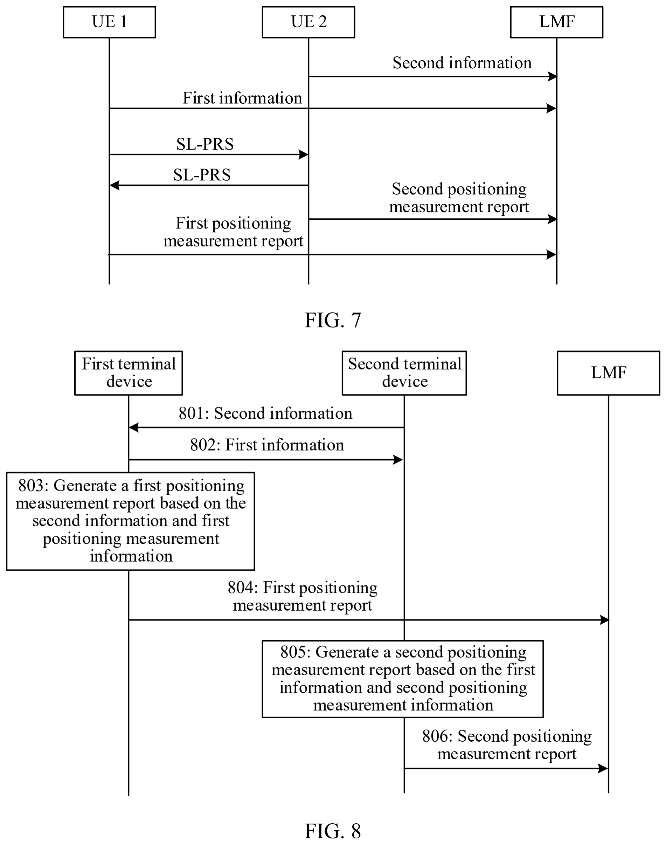

FIG. 2 is used as an example. FIG. 7 shows an example in which the UE 1 separately sends first positioning measurement information and first information, and the UE 2 separately sends second positioning measurement information and second information. As shown in FIG. 7, the UE 1 sends the first information to an LMF when configuring a sidelink positioning reference signal, and the UE 2 sends the second information to the LMF when configuring a sidelink positioning reference signal. For the first information sent by the UE 1 and the second information sent by the UE 2, refer to the foregoing descriptions. Details are not repeated herein. Then, after a positioning procedure is started, transmission of the sidelink positioning reference signal is performed between the UE 1 and the UE 2. The UE 1 generates a first positioning measurement report by measuring the sidelink positioning reference signal, and reports the first positioning measurement report to the LMF. The UE 2 generates a second positioning measurement report by measuring the sidelink positioning reference signal, and reports the second positioning measurement report to the LMF.

It may be understood that, in a process in which the UE 1 sends the first information and the first positioning measurement report to the LMF, the first information and the first positioning measurement report may alternatively be forwarded by another network element, for example, the first information and/or the first positioning measurement report that are/is sent by the UE 1 are/is sent to a service access and mobility management (access and mobility management function, AMF) of the UE 1 via a RAN, and then are/is sent by the AMF to the LMF. This is not limited in this embodiment of this application. Similarly, in a process in which the UE 2 sends the second information and the second positioning measurement report to the LMF, the second information and the second positioning measurement report may also be forwarded by another network element.

The following uses FIG. 2 as an example to describe content of the first information and the first positioning measurement report that are sent by the first terminal device (for example, the UE 1 in FIG. 2), and content of the second information and the second positioning measurement report that are sent by the second terminal device (for example, the UE 2 in FIG. 2).

FIG. 2 is used as an example. The first positioning measurement report sent by the UE 1 includes the positioning measurement report A1 and the positioning measurement report A2 described above. The first information sent by the UE 1 may include:

(SL-PRS 1 resource ID, UE1_ARP1 ID); and
(SL-PRS 3 resource ID, UE1_ARP2 ID).

The second positioning measurement report sent by the UE 2 includes the positioning measurement report A3 and the positioning measurement report A4 described above. The second information sent by the UE 2 may include:
(SL-PRS 2 resource ID, UE2_ARP1 ID).

FIG. 2 is still used as an example. The first positioning measurement report sent by the UE 1 includes the positioning measurement report A1 and the positioning measurement report A2 described above. The first information sent by the UE 1 may include:

(SL-PRS slot index 1, UE1_ARP1 ID); and
(SL-PRS slot index 3, UE1_ARP2 ID).

The second positioning measurement report sent by the UE 2 includes the positioning measurement report A3 and the positioning measurement report A4 described above. The second information sent by the UE 2 may include:
(SL-PRS slot index 2, UE2_ARP1 ID).

In another possible implementation, in step 602 and step 604, the first terminal device may send the first positioning measurement information and the first information by using the first positioning measurement report, and the second terminal device may send the second positioning measurement information and the second information by using the second positioning measurement report. In this embodiment of this application, a new first positioning measurement report may be defined to transmit the first positioning measurement information and the first information, and a new second positioning measurement report may be defined to transmit the second positioning information and the second information.

A first possible data structure of the positioning measurement report newly defined in this embodiment of this application may be:

PRS for Rx+Rx_Tx measurement+ARP ID for Rx+ARP ID for Tx+PRS for Tx

PRS for Rx represents a resource identifier of a received sidelink positioning reference signal, ARP ID for Rx represents an identifier of an ARP for receiving the sidelink positioning reference signal, PRS for Tx represents a resource identifier of a sent sidelink positioning reference signal, ARP ID for Tx represents an identifier of an ARP for sending the sidelink positioning reference signal, and Rx_Tx measurement represents a receive-transmit time difference associated with PRS for Rx and PRS for Tx.

Optionally, PRS for Rx may be omitted. In other words, the positioning measurement report may not include PRS for Rx.

The foregoing data structure is used as an example. In FIG. 2, the first positioning measurement report sent by the UE 1 may include:

a positioning measurement report B1:

SL-PRS 2 resource ID+Rx_Tx measurement 1+UE1_ARP1 ID+UE1_ARP1 ID+SL-PRS 1 resource ID
a positioning measurement report B2:
SL-PRS 2 resource ID+Rx_Tx measurement 2+UE1_ARP2 ID+UE1_ARP2 ID+SL-PRS 3 resource ID

The second positioning measurement report sent by the UE 2 may include:
a positioning measurement report B3:

SL-PRS 1 resource ID+Rx_Tx measurement 3+UE2_ARP1 ID+UE2_ARP1 ID+SL-PRS 2 resource ID
a positioning measurement report B4:
SL-PRS 3 resource ID+Rx_Tx measurement 4+UE2_ARP1 ID+UE2_ARP1 ID+SL-PRS 2 resource ID

A second possible data structure of the positioning measurement report newly defined in this embodiment of this application may be:

PRS slot for Rx+Rx_Tx measurement+ARP ID for Rx+ARP ID for Tx+PRS slot for Tx

PRS for Rx represents a timestamp of a received sidelink positioning reference signal, ARP ID for Rx represents an identifier of an ARP for receiving the sidelink positioning reference signal, PRS slot for Tx represents a timestamp of a sent sidelink positioning reference signal, ARP ID for Tx represents an identifier of an ARP for sending the sidelink positioning reference signal, and Rx_Tx measurement represents a receive-transmit time difference obtained through measurement.

Optionally, PRS slot for Rx may be omitted. In other words, the positioning measurement report may not include PRS slot for Rx.

The foregoing data structure is used as an example. In FIG. 2, the first positioning measurement report sent by the UE 1 may include:

a positioning measurement report C1:

SL-PRS slot index 2+Rx_Tx measurement 1+UE1_ARP1 ID+UE1_ARP1 ID+SL-PRS slot index 1
a positioning measurement report C2:

SL-PRS slot index 2+Rx_Tx measurement 2+UE1_ARP2 ID+UE1_ARP2 ID+SL-PRS slot index 3

The second positioning measurement report sent by the UE 2 may include:
a positioning measurement report C3:

SL-PRS slot index 1+Rx_Tx measurement 3+UE2_ARP1 ID+UE2_ARP1 ID+SL-PRS slot index 2
a positioning measurement report C4:
SL-PRS slot index 3+Rx_Tx measurement 4+UE2_ARP1 ID+UE2_ARP1 ID+SL-PRS slot index 2

It may be understood that the first possible data structure and the second possible data structure are merely examples. A data structure of the positioning measurement report is not limited in this embodiment of this application.

In a possible implementation, the first terminal device may send the first positioning measurement information and the first information to the device configured to perform positioning resolving, and the second terminal device may also send the second positioning measurement information and the second information to the device configured to perform positioning resolving. The device configured to perform positioning resolving may be the LMF. In this case, the first terminal device may send the positioning measurement information and the first information to the LMF in a core network. For example, in the architecture shown in FIG. 3, the terminal device 30, the terminal device 31, the terminal device 32, and the terminal device 33 may send, to the LMF 35 via the network device 34, positioning measurement information and positioning assistance information that are respectively obtained by the terminal device 30, the terminal device 31, the terminal device 32, and the terminal device 33 through measurement. The device configured to perform positioning resolving may alternatively be a terminal device. In this case, the first terminal device may send, through a sidelink, the first positioning measurement information and the first information to the terminal device configured to perform positioning resolving. For example, in the architecture shown in FIG. 4, the terminal device 40, the terminal device 41, and the terminal device 42 may send, to the terminal device 43 through the sidelink, positioning measurement information and positioning assistance information that are respectively obtained by the terminal device 40, the terminal device 41, and the terminal device 42 through measurement. The device configured to perform positioning resolving may alternatively be the first terminal device. In this case, the first terminal device does not need to send the first positioning measurement information and the first information to other devices, and the other devices send, to the first terminal device, positioning measurement information and positioning assistance information that are respectively obtained by the other devices through measurement. For example, in the architecture shown in FIG. 4, the terminal device 41, the terminal device 42, and the terminal device 43 may send, to the terminal device 40 through a sidelink, positioning measurement information and the first information that are respectively obtained by the terminal device 41, the terminal device 42, and the terminal device 43 through measurement.

It may be understood that, in FIG. 6, only an example in which the positioning measurement information and the positioning assistance information are sent to the LMF is used for description. In another embodiment, the positioning measurement information and the positioning assistance information may alternatively be sent to another device configured to perform positioning resolving. This is not limited in this embodiment of this application.

Based on the procedure shown in FIG. 6, after receiving the positioning measurement information and the positioning assistance information that are sent by the devices, the device configured to perform positioning resolving may perform matching on the positioning measurement information of the devices, to determine positioning measurement information that meets a principle of an RTT positioning technology, so as to perform positioning resolving according to the principle of the RTT positioning technology.

For example, the device that performs positioning resolving receives the first positioning measurement information and the first information that are sent by the first terminal device, and receives the second positioning measurement information and the second information that are sent by the second terminal device. The device that performs positioning resolving determines, based on the first information and the first positioning measurement information that are sent by the first terminal device, and the second information and the second positioning measurement information that are sent by the second terminal device, that the first positioning measurement information matches the second positioning measurement information, and performs positioning based on the first positioning measurement information and the second positioning measurement information.

The UE 1 and the UE 2 in FIG. 2 are used as an example. The first positioning measurement information reported by the UE 1 is the positioning measurement report B1 and the positioning measurement report B2 described above, and the second positioning measurement information reported by the UE 2 is the positioning measurement report B3 and the positioning measurement report B4 described above. Based on the positioning measurement report B1, it may be determined that the UE1_ARP1 on the UE 1 is for receiving the SL-PRS 2 and sending the SL-PRS 1. Based on the positioning measurement report B3, it may be determined that the UE2_ARP1 on the UE 2 is for receiving the SL-PRS 1 and sending the SL-PRS 2. It can be learned that the positioning measurement report B1 and the positioning measurement report B2 meet a receiving and sending consistency principle, that is, a same ARP is used for receiving and sending the sidelink positioning reference signals. In addition, the sidelink positioning reference signal sent by the UE 1 matches the sidelink positioning reference signal received by the UE 2, and the sidelink positioning reference signal sent by the UE 2 also matches the sidelink positioning reference signal received by the UE 1. Therefore, matched positioning measurement reports may be formed to perform RTT positioning calculation. Similarly, the positioning measurement report B2 reported by the UE 1 and the positioning measurement report B4 reported by the UE 2 may also form matched positioning measurement reports to perform RTT positioning calculation.

However, based on the positioning measurement report B1 reported by the UE 1 and the positioning measurement report B4 reported by the UE 2, it can be learned that the sidelink positioning reference signal sent by the UE 1 does not match the sidelink positioning reference signal received by the UE 2. Therefore, matched positioning measurement reports cannot be formed to perform RTT positioning calculation.

The UE 1 and the UE 2 in FIG. 2 are still used as an example. The first positioning measurement information reported by the UE 1 is the positioning measurement report C1 and the positioning measurement report C2 described above, and the positioning measurement information reported by the UE 2 is the positioning measurement report C3 and the positioning measurement report C4 described above. Based on the positioning measurement report C1, it may be determined that the UE1_ARP1 on the UE 1 is for receiving a sidelink positioning reference signal in a slot corresponding to the slot index 2, and sending a sidelink positioning reference signal in a slot corresponding to the slot index 1. Based on the positioning measurement report C3, it may be determined that the UE2_ARP1 on the UE 2 is for receiving the sidelink positioning reference signal in the slot corresponding to the slot index 1, and sending the sidelink positioning reference signal in the slot corresponding to the slot index 2. It can be learned that the slot in which the UE 1 sends the sidelink positioning reference signal is the same as the slot in which the UE 2 receives the sidelink positioning reference signal, and the slot in which the UE 2 sends the sidelink positioning reference signal is also the same as the slot in which the UE 1 receives the sidelink positioning reference signal. In addition, the positioning measurement report C1 and the positioning measurement report C3 meet a receiving and sending consistency principle. Therefore, matched positioning measurement reports may be formed to perform RTT positioning calculation. Similarly, the positioning measurement report C2 reported by the UE 1 and the positioning measurement report C4 reported by the UE 2 may also form matched positioning measurement reports to perform RTT positioning calculation.

However, based on the positioning measurement report C1 reported by the UE 1 and the positioning measurement report C4 reported by the UE 2, it can be learned that the slot in which the UE 1 sends the sidelink positioning reference signal is different from the slot in which the UE 2 receives the sidelink positioning reference signal. Therefore, matched positioning measurement reports cannot be formed to perform RTT positioning calculation.

In some embodiments, the positioning measurement report C1, the positioning measurement report C2, the positioning measurement report C3, and the positioning measurement report C4 may not include the timestamp of the received sidelink positioning reference signal. The LMF may obtain, in advance, time-frequency resources for sending sidelink positioning reference signals by the UE 1 and the UE 2. For example, the RAN allocates the time-frequency resources for the sidelink positioning reference signals to the UE 1 and the UE 2, and then notifies the LMF. In this case, the LMF may determine the slot in which the UE 1 sends the sidelink positioning reference signal, the slot in which the UE 2 receives the sidelink positioning reference signal, the slot in which the UE 2 sends the sidelink positioning reference signal, and the slot in which the UE 1 receives the sidelink positioning reference signal. Therefore, matching may be performed on positioning measurement reports reported by different terminal devices.

It can be learned from the procedure shown in FIG. 6 that, for positioning measurement and reporting based on an ARP level, in this embodiment of this application, in addition to reporting positioning measurement information, the terminal device may further report positioning assistance information. The positioning assistance information may indicate an association between an ARP on the terminal device and a sidelink positioning reference signal sent via the ARP, so that the device that performs positioning resolving may perform matching on positioning measurement information reported by terminal devices, to select positioning measurement information that meets the RTT positioning principle for positioning resolving. In this way, a problem of a positioning error or a positioning failure caused by a positioning measurement information matching error can be avoided.

FIG. 8 is a diagram of another positioning measurement information reporting procedure according to an embodiment of this application.

In this embodiment of this application, a first terminal device has one or more antenna reference points (referred to as ARPs for short below), and a second terminal device has one or more ARPs. The first terminal device may send at least one sidelink positioning reference signal to the second terminal device via at least one ARP, or the second terminal device may send at least one sidelink positioning reference signal to the first terminal device via at least one ARP. For example, a first ARP on the first terminal device may be for sending a first sidelink positioning reference signal to the second terminal device, and a second ARP on the second terminal device may be for receiving the first sidelink positioning reference signal sent by the first terminal device. The second ARP on the second terminal device may be for sending a second sidelink positioning reference signal to the first terminal device, and the first ARP on the first terminal device may be for receiving the second sidelink positioning reference signal sent by the second terminal device. The first terminal device and the second terminal device may obtain positioning measurement information by measuring sidelink positioning reference signals.

As shown in FIG. 8, the procedure may include the following steps.

Step 801: The second terminal device sends second information to the first terminal device, and correspondingly, the first terminal device receives the second information. The second information sent by the second terminal device indicates an association between the at least one ARP on the second terminal device and the at least one sidelink positioning reference signal sent via the at least one ARP.

Step 802: The first terminal device sends first information to the second terminal device, and correspondingly, the second terminal device receives the first information. The first information sent by the first terminal device indicates an association between the at least one ARP on the first terminal device and the at least one sidelink positioning reference signal sent via the at least one ARP.

In this embodiment of this application, for the first information sent by the first terminal device and the second information sent by the second terminal device, refer to related content in the procedure shown in FIG. 6. Details are not repeated herein.

In a possible implementation, a process of exchanging positioning assistance information between the first terminal device and the second terminal device may occur before a positioning measurement report is reported or before positioning measurement starts. For example, when obtaining a time-frequency resource for the first positioning reference signal, the second terminal device may determine a specific ARP for sending a positioning reference signal corresponding to a specific resource identifier (in other words, an association between an identifier of the ARP and the resource identifier of the positioning reference signal has been obtained in this case), or may determine, a specific ARP and a specific slot for sending the positioning reference signal (in other words, an association between an identifier of the ARP and a timestamp of the positioning reference signal has been obtained in this case). Therefore, the second terminal device may send the second information to the first terminal device before the positioning measurement starts or before the positioning measurement report is sent. Similarly, the first terminal device may alternatively send the first information to the second terminal device after determining a time-frequency resource for the positioning reference signal. For example, when configuring the positioning reference signals, the first terminal device and the second terminal device may exchange the positioning assistance information by using an existing message.

Step 803: The first terminal device generates a first positioning measurement report based on the second information and first positioning measurement information obtained by the first terminal device by measuring the sidelink positioning reference signal.

Optionally, in addition to including the first positioning measurement information, the first positioning measurement report may further indicate an association between the second sidelink positioning reference signal (the second sidelink positioning reference signal is sent via the second ARP on the second terminal device) and the second ARP that is on the second terminal device and that is for sending the second sidelink positioning reference signal.

Optionally, the first positioning measurement report includes an identifier of the second ARP that is on the second terminal device and that is for sending the second sidelink positioning reference signal.

For example, the first ARP on the first terminal device is for receiving the second sidelink positioning reference signal sent by the second terminal device. The first terminal device may obtain the first positioning measurement information by measuring the second sidelink positioning reference signal. The first positioning measurement information obtained by the first terminal device may include a time difference between time of receiving the second positioning reference signal via the first ARP and time of sending the sidelink positioning reference signal via the first antenna reference point. Optionally, the first positioning measurement information may further include an identifier of the first ARP. Optionally, the first positioning measurement information may further include a resource identifier of the second sidelink positioning reference signal. For a specific implementation, refer to related content in step 601 in the procedure shown in FIG. 6.

After obtaining the first positioning measurement information, the first terminal device may generate the first positioning measurement report based on the first positioning measurement information and the second information from the second terminal device. The first positioning measurement report is a positioning measurement report newly defined in this embodiment of this application. The first positioning measurement report may not only include the positioning measurement information, but also indicate an association between a positioning reference signal received by the first terminal device and an ARP that is on the second terminal device and that is for sending the positioning reference signal.

In a possible implementation, for example, the first terminal device receives the second sidelink positioning reference signal. The first positioning measurement report generated by the first terminal device includes the resource identifier of the second sidelink positioning reference signal and the identifier of the ARP that is on the second terminal device and that is for sending the second positioning reference signal. Specifically, the second information received by the first terminal device from the second terminal device includes the resource identifier of the second positioning reference signal and the identifier of the second ARP. After obtaining the first positioning measurement information by measuring the second positioning reference signal, the first terminal device may add, to the first positioning measurement information based on the second information from the second terminal device, the identifier of the second ARP associated with the second positioning reference signal, to generate the first positioning measurement report.

FIG. 2 is used as an example. The first terminal device is the UE 1 in FIG. 2, and the second terminal device is the UE 2 in FIG. 2. Second information received by the UE 1 from the UE 2 includes (SL-PRS 2 resource ID, UE2_ARP1 ID). After obtaining time differences Rx_Tx measurement 1 and Rx_Tx measurement 2 by measuring a received SL-PRS 2, the UE 1 may add, based on the received second information (SL-PRS 2 resource ID, UE2_ARP1 ID), the UE2_ARP1 ID associated with the SL-PRS 2 to positioning measurement information respectively corresponding to Rx_Tx measurement 1 and Rx_Tx measurement 2.

For example, a possible data structure of a positioning measurement report is:

PRS for Rx+ARP ID for Tx+Rx_Tx measurement+ARP ID for Rx

PRS for Rx represents a resource identifier of a received sidelink positioning reference signal, ARP ID for Tx represents an identifier of an ARP that is on a peer device and that is for sending the sidelink positioning reference signal corresponding to PRS for Rx, ARP ID for Rx represents an identifier of an ARP for receiving the sidelink positioning reference signal corresponding to PRS for Rx, and Rx_Tx measurement represents a receive-transmit time difference obtained by measuring received PRS for Rx.

Optionally, PRS for Rx may be omitted. In other words, the positioning measurement report may not include PRS for Rx.

A first measurement report obtained by the UE 1 through measurement may include:

a positioning measurement report D1:

> SL-PRS 2 resource ID+UE2_ARP1 ID+Rx_Tx measurement 1+UE1_ARP1 ID
> a positioning measurement report D2:
> SL-PRS 2 resource ID+UE2_ARP1 ID+Rx_Tx measurement 2+UE1_ARP2 ID

In another possible implementation, for example, the first terminal device receives the second sidelink positioning reference signal. The first positioning measurement report generated by the first terminal device includes a timestamp of the second positioning reference signal and the identifier of the second ARP that is on the second terminal device and that is for sending the second positioning reference signal. Specifically, the second information received by the first terminal device from the second terminal device includes the timestamp of the second positioning reference signal and the identifier of the second ARP. After obtaining the first positioning measurement information by measuring the second positioning reference signal, the first terminal device may add, to the first positioning measurement information based on the second information from the second terminal device, the identifier of the second ARP associated with the timestamp of the second positioning reference signal, to generate the first positioning measurement report.

FIG. 2 is used as an example. The first terminal device is the UE 1 in FIG. 2, and the second terminal device is the UE 2 in FIG. 2. Second information received by the UE 1 from the UE 2 includes (SL-PRS 2 slot index 2, UE2_ARP1 ID). After obtaining receive time differences Rx_Tx measurement 1 and Rx_Tx measurement 2 by measuring a received SL-PRS 2, the UE 1 may add, based on the received second information (SL-PRS 2 slot index 2, UE2_ARP1 ID), the UE2_ARP1 ID associated with an SL-PRS 2 (or with the SL-PRS 2 slot index 2) to positioning measurement information respectively corresponding to Rx_Tx measurement 1 and Rx_Tx measurement 2.

For example, a possible data structure of a positioning measurement report is:

PRS slot for Rx+ARP ID for Tx+Rx_Tx measurement+ARP ID for Rx

PRS for Rx represents a timestamp of a received sidelink positioning reference signal, ARP ID for Tx represents an identifier of an ARP that is on a peer device and that is for sending the sidelink positioning reference signal corresponding to PRS for Rx, ARP ID for Rx represents an identifier of an ARP for receiving the sidelink positioning reference signal corresponding to PRS for Rx, and Rx_Tx measurement represents a receive-transmit time difference obtained by measuring PRS for Rx.

Optionally, PRS slot for Rx may be omitted. In other words, the positioning measurement report may not include PRS slot for Rx.

A first measurement report obtained by the UE 1 through measurement may include:

a positioning measurement report E1:

> SL-PRS 2 slot 2+UE2_ARP1 ID+Rx_Tx measurement 1+UE1_ARP1 ID
> a positioning measurement report E2:
> SL-PRS 2 slot 2+UE2_ARP1 ID+Rx_Tx measurement 2+UE1_ARP2 ID

Optionally, PRS slot for Rx may be omitted. In other words, the positioning measurement report may not include PRS slot for Rx.

Step 804: The first terminal device sends the first positioning measurement report generated in step 803.

In a possible implementation, the first terminal device may send the first positioning measurement report to a device configured to perform positioning resolving. The device configured to perform positioning resolving may be an LMF. In this case, the first terminal device may send the first positioning measurement report to the LMF in a core network. For example, in the architecture shown in FIG. 3, the terminal device 30, the terminal device 31, the terminal device 32, and the terminal device 33 may send, to the LMF 35 via the network device 34, positioning measurement reports respectively obtained by the terminal device 30, the terminal device 31, the terminal device 32, and the terminal device 33 through measurement. The device configured to perform positioning resolving may alternatively be a terminal device. In this case, the first terminal device may send, through a sidelink, the first positioning measurement report to the terminal device configured to perform positioning resolving. For example, in the architecture shown in FIG. 4, the terminal device 40, the terminal device 41, and the terminal device 42 may send, to the terminal device 43 through the sidelink, positioning measurement reports respectively obtained by the terminal device 40, the terminal device 41, and the terminal device 42 through measurement. The device configured to perform positioning resolving may alternatively be the first terminal device. In this case, the first terminal device does not need to send the first positioning measurement report to other devices, and the other devices send, to the first terminal device, positioning measurement reports respectively obtained by the other devices through measurement. For example, in the architecture shown in FIG. 4, the terminal device 41, the terminal device 42, and the terminal device 43 may send, to the terminal device 40 through a sidelink, positioning measurement reports respectively obtained by the terminal device 41, the terminal device 42, and the terminal device 43 through measurement.

It may be understood that, in FIG. 8, only an example in which the positioning measurement report is sent to the LMF is used for description. In another embodiment, the positioning measurement report may alternatively be sent to another device configured to perform positioning resolving. This is not limited in this embodiment of this application.

Step 805: The second terminal device generates a second positioning measurement report based on the first information from the first terminal device and second positioning measurement information obtained by the second terminal device by measuring the sidelink positioning reference signal.

For example, the second ARP on the second terminal device is for receiving the first sidelink positioning reference signal sent via the first ARP on the first terminal device. The second positioning measurement report includes the second positioning measurement information, the second positioning measurement information is obtained by the second terminal device by measuring the first sidelink positioning reference signal, and the second positioning measurement report indicates an association between the first ARP and the first sidelink positioning reference signal. For a manner in which the second terminal device generates the second positioning measurement report, refer to the manner provided in step 803. Details are not described herein again.

FIG. 2 is used as an example. The first terminal device is the UE 1 in FIG. 2, and the second terminal device is the UE 2 in FIG. 2. A possible data structure of a positioning measurement report is: PRS for Rx+ARP ID for Tx+Rx_Tx measurement+ARP ID for Rx. In this case, a second positioning measurement report generated by the UE 2 includes: a positioning measurement report D3:

SL-PRS 1 resource ID+UE1_ARP1 ID+Rx_Tx measurement 3+UE2_ARP1 ID
a positioning measurement report D4:
SL-PRS 3 resource ID+UE1_ARP2 ID+Rx_Tx measurement 4+UE2_ARP1 ID

FIG. 2 is still used as an example. The first terminal device is the UE 1 in FIG. 2, and the second terminal device is the UE 2 in FIG. 2. A possible data structure of a positioning measurement report is: PRS slot for Rx+ARP ID for Tx+Rx_Tx measurement+ARP ID for Rx. In this case, a second positioning measurement report generated by the UE 2 includes: a positioning measurement report E3:

SL-PRS 2 slot 1+UE1_ARP1 ID+Rx_Tx measurement 1+UE1_ARP1 ID
a positioning measurement report E4:
SL-PRS 2 slot 3+UE1_ARP2 ID+Rx_Tx measurement 2+UE1_ARP2 ID

Optionally, PRS slot for Rx may be omitted. In other words, the positioning measurement report may not include PRS slot for Rx.

Step 806: The second terminal device sends the second positioning measurement report generated in step 805.

Based on the procedure shown in FIG. 8, after receiving the positioning measurement reports sent by the terminal devices, the device configured to perform positioning resolving may perform matching on the positioning measurement reports of the terminal devices, to determine a positioning measurement report that meets a principle of an RTT positioning technology, so as to perform positioning resolving according to the principle of the RTT positioning technology.

For example, the device that performs positioning resolving receives the first positioning measurement report sent by the first terminal device and the second positioning measurement report sent by the second terminal device. For specific descriptions of the first positioning measurement report and the second positioning measurement report, refer to the foregoing descriptions. The device that performs positioning resolving may determine that the first positioning measurement report matches the second positioning measurement report, and the device that performs positioning resolving performs positioning based on the first positioning measurement report and the second positioning measurement report.

The UE 1 and the UE 2 in FIG. 2 are used as an example. The first positioning measurement report reported by the UE 1 is the positioning measurement report D1 and the positioning measurement report D2 described above, and the second positioning measurement report reported by the UE 2 is the positioning measurement report D3 and the positioning measurement report D4 described above. Based on the positioning measurement report D1, it may be determined that an SL-PRS 2 received via a UE1_ARP1 on the UE 1 is sent via an ARP 1 on the UE 2. Based on the positioning measurement report D3, it may be determined that an SL-PRS 1 received via a UE2_ARP1 on the UE 2 is sent via an ARP 1 on the UE 1. It can be learned that the sidelink positioning reference signal sent by the UE 1 matches the sidelink positioning reference signal received by the UE 2, and the sidelink positioning reference signal sent by the UE 2 also matches the sidelink positioning reference signal received by the UE 1. Therefore, matched positioning measurement reports may be formed to perform RTT positioning calculation. Similarly, the positioning measurement report D2 reported by the UE 1 and the positioning measurement report D4 reported by the UE 2 may also form matched positioning measurement reports to perform RTT positioning calculation.

However, based on the positioning measurement report D1 reported by the UE 1 and the positioning measurement report D4 reported by the UE 2, it can be learned that the sidelink positioning reference signal sent by the UE 1 does not match the sidelink positioning reference signal received by the UE 2. Therefore, matched positioning measurement reports cannot be formed to perform RTT positioning calculation. Similarly, the positioning measurement report D2 reported by the UE 1 and the positioning measurement report D4 reported by the UE 2 cannot form matched positioning measurement reports.

The UE 1 and the UE 2 in FIG. 2 are still used as an example. The positioning measurement report reported by the UE 1 is the positioning measurement report E1 and the positioning measurement report E2 described above, and the second positioning measurement report reported by the UE 2 is the positioning measurement report E3 and the positioning measurement report E4 described above. Based on the positioning measurement report E1, it may be determined that a UE1_ARP1 on the UE 1 is for receiving a sidelink positioning reference signal in a slot corresponding to the slot index 2, and the sidelink positioning reference signal is sent via an ARP 1 on the UE 2. Based on the positioning measurement report E3, it may be determined that a UE2_ARP1 on the UE 2 is for receiving a sidelink positioning reference signal in a slot corresponding to the slot index 1, and the sidelink positioning reference signal is sent via an ARP 1 on the UE1. It can be learned that the positioning measurement report E1 and the positioning measurement report E3 may form matched positioning measurement reports to perform RTT positioning calculation. Similarly, the positioning measurement report E2 reported by the UE 1 and the positioning measurement report E4 reported by the UE 2 may also form matched positioning measurement reports to perform RTT positioning calculation.

However, based on the positioning measurement report E1 reported by the UE 1 and the positioning measurement report E4 reported by the UE 2, it can be learned that a slot in which the UE 1 sends the sidelink positioning reference signal is different from the slot in which the UE 2 receives the sidelink positioning reference signal. Therefore, matched positioning measurement reports cannot be formed to perform RTT positioning calculation. Similarly, the positioning measurement report E2 reported by the UE 1 and the positioning measurement report E4 reported by the UE 2 cannot form matched positioning measurement reports.

In some embodiments, the positioning measurement report E1, the positioning measurement report E2, the positioning measurement report E3, and the positioning measurement report E4 may not include the timestamp of the received sidelink positioning reference signal. The LMF may obtain, in advance, time-frequency resources for sending sidelink positioning reference signals by the UE 1 and the UE 2. For example, a RAN allocates the time-frequency resources for the sidelink positioning reference signals to the UE 1 and the UE 2, and then notifies the LMF. In this case, the LMF may determine the slot in which the UE 1 sends the sidelink positioning reference signal, the slot in which the UE 2 receives the sidelink positioning reference signal, a slot in which the UE 2 sends the sidelink positioning reference signal, and the slot in which the UE 1 receives the sidelink positioning reference signal. Therefore, matching may be performed on positioning measurement reports reported by different terminal devices.

It may be understood that, in the procedure shown in FIG. 8, in a process in which the first terminal device and the second terminal device send positioning assistance information and positioning measurement reports to the LMF, the positioning assistance information and the positioning measurement reports may alternatively be forwarded by another network element. This is not limited in this embodiment of this application.

It may be understood that, in the procedure shown in FIG. 8, a time sequence relationship between steps is merely a possible example. This is not limited in this embodiment of this application. For example, there is no strict requirement on a time sequence in which the first terminal device and the second terminal device generate and send the positioning measurement reports.

Based on the procedure shown in FIG. 8, in a scenario in which the positioning measurement report is reported per ARP, because the positioning measurement report includes the positioning assistance information that can help perform matching on the positioning measurement report, the device configured to perform positioning resolving can perform matching on the positioning measurement reports reported by the devices. In this way, a problem of a positioning error or a positioning failure caused by a positioning measurement report matching error can be avoided.

It may be understood that, to implement the functions in the foregoing embodiments, the network device (for example, the LMF configured to perform positioning resolving) and the terminal device include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on particular application scenarios and design constraints of the technical solutions.

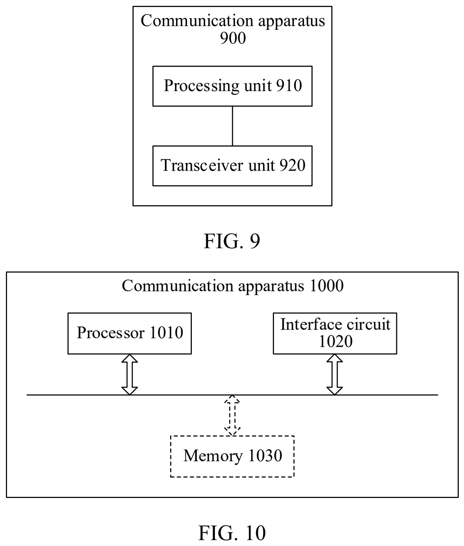

FIG. 9 and FIG. 10 are diagrams of structures of possible communication apparatuses according to embodiments of this application. These communication apparatuses may be configured to implement functions of the terminal device or the network device in the foregoing method embodiments, and therefore can also implement beneficial effects of the foregoing method embodiments. In this embodiment of this application, the communication apparatus may be one of the terminal devices shown in FIG. 3, FIG. 4, or FIG. 5, may be the LMF shown in FIG. 3, or may be a module (for example, a chip) used in the terminal device or the network device (for example, an LMF).

As shown in FIG. 9, a communication apparatus 900 includes a processing unit 910 and a transceiver unit 920. The communication apparatus 900 is configured to implement a function of the terminal device or the network device (for example, an LMF) in the method embodiment shown in FIG. 6 or FIG. 7.

When the communication apparatus 900 is configured to implement the function of the terminal device in the method embodiment shown in FIG. 6 or FIG. 7, the processing unit 910 is configured to determine first positioning measurement information and first information, where the first information indicates an association between at least one antenna reference point and at least one sidelink positioning reference signal sent via the at least one antenna reference point, and the at least one antenna reference point is an antenna reference point on a first terminal device. The processing unit 910 is further configured to send the first positioning measurement information and the first information via the transceiver unit 920.

When the communication apparatus 900 is configured to implement the function of the network device (for example, the LMF) in the method embodiment shown in FIG. 6 or FIG. 7, the transceiver unit 920 is configured to receive first positioning measurement information and first information from a first terminal, where the first information indicates an association between at least one antenna reference point and at least one sidelink positioning reference signal sent via the at least one antenna reference point, and the at least one antenna reference point is an antenna reference point on the first terminal device. The processing unit 910 is configured to perform positioning based on the first positioning measurement information and the first information.

When the communication apparatus 900 is configured to implement a function of the terminal device in the method embodiment shown in FIG. 8, the transceiver unit 920 is configured to receive second information, where the second information indicates an association between at least one antenna reference point and at least one sidelink positioning reference signal sent via the at least one antenna reference point, and the at least one antenna reference point is an antenna reference point on a second terminal device, where the at least one antenna reference point includes a second antenna reference point, and the at least one sidelink positioning reference signal includes a second sidelink positioning reference signal sent via the second antenna reference point. The processing unit 910 is configured to generate a first positioning measurement report based on the second information and first positioning measurement information, where the first positioning measurement information is obtained by a first terminal device by measuring the second sidelink positioning reference signal, where the first positioning measurement report includes the first positioning measurement information, and the first positioning measurement report indicates an association between the second antenna reference point and the second sidelink positioning reference signal. The processing unit 910 is further configured to send the first positioning measurement report via the transceiver unit 920.

When the communication apparatus 900 is configured to implement a function of the network device (for example, an LMF) in the method embodiment shown in FIG. 8, the transceiver unit 920 is configured to receive a first positioning measurement report from a first terminal device, where the first positioning measurement report includes first positioning measurement information, the first positioning measurement information is obtained by the first terminal device by measuring a second sidelink positioning reference signal, and the first positioning measurement report indicates an association between a second antenna reference point and the second sidelink positioning reference signal, where the second antenna reference point is an antenna reference point that is on a second terminal device and that is for sending the second sidelink positioning reference signal. The processing unit 910 is configured to perform positioning based on the first positioning measurement report.

For more detailed descriptions of the processing unit 910 and the transceiver unit 920, refer directly to related descriptions in the method embodiment shown in FIG. 6, FIG. 7, or FIG. 8. Details are not described herein again.

As shown in FIG. 10, a communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to: store instructions executed by the processor 1010, store input data needed by the processor 1010 to run instructions, or store data generated after the processor 1010 runs instructions.

When the communication apparatus 1000 is configured to implement the method shown in FIG. 6, FIG. 7, or FIG. 8, the processor 1010 is configured to implement a function of the processing unit 910, and the interface circuit 1020 is configured to implement a function of the transceiver unit 920.

When the communication apparatus is a chip used in a terminal device, the chip in the terminal implements the functions of the terminal device in the foregoing method embodiments. The chip in the terminal receives information from another module in the terminal device, where the information is sent by a network device to the terminal. Alternatively, the chip in the terminal sends information to another module in the terminal device, where the information is sent by the terminal device to a network device.

It may be understood that, the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

In this application, another example of a communication apparatus is provided. The communication apparatus includes at least one processor and at least one memory. The at least one processor is coupled to the at least one memory. The at least one memory is configured to store instructions. When the instructions are executed by the at least one processor, the communication apparatus is enabled to perform the method in the foregoing embodiments. For example, the communication apparatus includes one processor and one memory. As shown in FIG. 10, the communication apparatus 1000 includes one processor 1010 and one memory 1030. The processor 1010 is coupled to the memory 1030. The memory 1030 stores instructions. When the instructions stored in the memory 1030 are executed by the processor 1010, the communication apparatus 1000 performs the method performed by the terminal device or the network device in the foregoing embodiments.

The method steps in embodiments of this application may be implemented in hardware, or may be implemented in software instructions that can be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium, and can write information into the storage medium. The storage medium may alternatively be a component of the processor. The processor and the storage medium may be located in an ASIC. In addition, the ASIC may be located in a network device or a terminal. The processor and the storage medium may alternatively exist in the network device or the terminal as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer program or the instructions are loaded and executed on a computer, all or some of the procedures or functions in embodiments of this application are executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects. "Including at least one of A, B, and C" may indicate: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence. The execution sequence of the processes should be determined based on functions and internal logic of the processes.

**Claims**

1.  A positioning measurement information reporting method, wherein the method comprises:

    determining first positioning measurement information and first information, wherein the first information indicates an association between at least one antenna reference point and at least one sidelink positioning reference signal sent via the at least one antenna reference point, and the at least one antenna reference point is an antenna reference point on a first terminal device; and
    sending the first positioning measurement information and the first information.

2.  The method according to claim 1, wherein the association between the at least one antenna reference point and the at least one sidelink positioning reference signal sent via the at least one antenna reference point comprises:
    an association between an identifier of the at least one antenna reference point and a resource identifier of the at least one sidelink positioning reference signal.

3.  The method according to claim 2, wherein the identifier of the at least one antenna reference point and the resource identifier of the at least one sidelink positioning reference signal are comprised in the first information.

4.  The method according to claim 1, wherein the association between the at least one antenna reference point and the at least one sidelink positioning reference signal sent via the at least one antenna reference point comprises:
    an association between an identifier of the at least one antenna reference point and a timestamp of the at least one sidelink positioning reference signal.

5.  The method according to claim 4, wherein the timestamp of the at least one sidelink positioning reference signal and the identifier of the at least one antenna reference point are comprised in the first information.

6.  The method according to either claim 4 or 5, wherein the timestamp of the at least one sidelink positioning reference signal is indication information of a time domain unit in which the at least one sidelink positioning reference signal is located.

7.  The method according to any one of claims 1 to 6, wherein the determining the first positioning measurement information and the first information comprises:

    determining the first information before a second sidelink positioning reference signal is received from a second terminal device; and
    determining the first positioning measurement information after the second sidelink positioning reference signal is received, wherein the first positioning measurement information is obtained by measuring the second sidelink positioning reference signal; and
    the sending the first positioning measurement information and the first information comprises:
    sending the first information before sending the first positioning measurement information.

8.  The method according to any one of claims 1 to 6, wherein the sending the first positioning measurement information and the first information comprises:
    sending a first positioning measurement report, wherein the first positioning measurement report comprises the first positioning measurement information and the first information.

9. A positioning measurement information reporting method, wherein the method comprises:

receiving first positioning measurement information and first information from a first terminal device, wherein the first information indicates an association between at least one antenna reference point and at least one sidelink positioning reference signal sent via the at least one antenna reference point, and the at least one antenna reference point is an antenna reference point on the first terminal device; and
performing positioning based on the first positioning measurement information and the first information.

10. The method according to claim 9, wherein the association between the at least one antenna reference point and the at least one sidelink positioning reference signal sent via the at least one antenna reference point comprises:
an association between an identifier of the at least one antenna reference point and a resource identifier of the at least one sidelink positioning reference signal.

11. The method according to claim 10, wherein the identifier of the at least one antenna reference point and the resource identifier of the at least one sidelink positioning reference signal are comprised in the first information.

12. The method according to claim 9, wherein the association between the at least one antenna reference point and the at least one sidelink positioning reference signal sent via the at least one antenna reference point comprises:
an association between an identifier of the at least one antenna reference point and a timestamp of the at least one sidelink positioning reference signal.

13. The method according to claim 12, wherein the timestamp of the at least one sidelink positioning reference signal and the identifier of the at least one antenna reference point are comprised in the first information.

14. The method according to either claim 12 or 13, wherein the timestamp of the at least one sidelink positioning reference signal is indication information of a time domain unit in which the at least one sidelink positioning reference signal is located.

15. The method according to any one of claims 9 to 14, wherein the at least one antenna reference point comprises a first antenna reference point, the first positioning measurement information is obtained by the first terminal device by measuring a second sidelink positioning reference signal, and the second sidelink positioning reference signal is sent by a second terminal device; and
the method further comprises:

receiving second positioning measurement information and second information from the second terminal device, wherein the second information indicates an association between at least one antenna reference point on the second terminal device and at least one sidelink positioning reference signal sent via the at least one antenna reference point, the at least one antenna reference point comprises a second antenna reference point, the at least one sidelink positioning reference signal comprises the second sidelink positioning reference signal sent via the second antenna reference point, and the second positioning measurement information is obtained by the second terminal device by measuring a first sidelink positioning reference signal;
determining, based on the first positioning measurement information, the first information, the second positioning measurement information, and the second information, that the first positioning measurement information matches the second positioning measurement information; and
performing positioning based on the first positioning measurement information and the second positioning measurement information.

16. A positioning measurement information reporting method, wherein the method comprises:

receiving second information, wherein the second information indicates an association between at least one antenna reference point and at least one sidelink positioning reference signal sent via the at least one antenna reference point, and the at least one antenna reference point is an antenna reference point on a second terminal device, wherein the at least one antenna reference point comprises a second antenna reference point, and the at least one sidelink positioning reference signal comprises a second sidelink positioning reference signal sent via the second antenna reference point;
generating a first positioning measurement report based on the second information and first positioning measurement information, wherein the first positioning measurement information is obtained by a first terminal device by measuring the second sidelink positioning reference signal, the first positioning measurement report comprises the first positioning measurement information, and the first positioning measurement report indicates an association between the second antenna reference point and the second sidelink positioning reference signal; and

sending the first positioning measurement report.

17. The method according to claim 16, wherein the first positioning measurement report comprises an identifier of the second antenna reference point.

18. The method according to claim 17, wherein the association between the at least one antenna reference point and the at least one sidelink positioning reference signal sent via the at least one antenna reference point comprises:
an association between an identifier of the at least one antenna reference point and a resource identifier of the at least one sidelink positioning reference signal.

19. The method according to either claim 17 or 18, wherein the identifier of the at least one antenna reference point and the resource identifier of the at least one sidelink positioning reference signal are comprised in first information.

20. The method according to either claim 16 or 17, wherein the association between the at least one antenna reference point and the at least one sidelink positioning reference signal sent via the at least one antenna reference point comprises:
an association between an identifier of the at least one antenna reference point and a timestamp of the at least one sidelink positioning reference signal.

21. The method according to claim 20, wherein the timestamp of the at least one sidelink positioning reference signal and the identifier of the at least one antenna reference point are comprised in first information.

22. The method according to either claim 20 or 21, wherein the timestamp of the at least one sidelink positioning reference signal is indication information of a time domain unit in which the at least one sidelink positioning reference signal is located.

23. A positioning measurement information reporting method, wherein the method comprises:

receiving a first positioning measurement report from a first terminal device, wherein the first positioning measurement report comprises first positioning measurement information, the first positioning measurement information is obtained by the first terminal device by measuring a second sidelink positioning reference signal, and the first positioning measurement report indicates an association between a second antenna reference point and the second sidelink positioning reference signal, wherein the second antenna reference point is an antenna reference point that is on a second terminal device and that is for sending the second sidelink positioning reference signal; and
performing positioning based on the first positioning measurement report.

24. The method according to claim 23, wherein the first positioning measurement report comprises an identifier of the second antenna reference point.

25. The method according to either claim 23 or 24, wherein the association between the second antenna reference point and the second sidelink positioning reference signal comprises:
an association between the identifier of the second antenna reference point and a resource identifier of the second sidelink positioning reference signal.

26. The method according to either claim 23 or 24, wherein the association between the second antenna reference point and the second sidelink positioning reference signal comprises:
an association between the identifier of the second antenna reference point and a timestamp of the second sidelink positioning reference signal.

27. The method according to claim 26, wherein the timestamp of the second sidelink positioning reference signal is indication information of a time domain unit in which the second sidelink positioning reference signal is located.

28. The method according to any one of claims 23 to 27, further comprising:

receiving a second positioning measurement report from the second terminal device, wherein the second positioning measurement report comprises second positioning measurement information, the second positioning measurement information is obtained by the second terminal device by measuring a first sidelink positioning reference signal, and the second positioning measurement report indicates an association between a first antenna reference point and the first sidelink positioning reference signal, wherein the first antenna reference point is an antenna reference point that is on the first terminal device and that is for sending the first sidelink positioning reference signal; and

the performing positioning based on the first positioning measurement report comprises:

determining that the first positioning measurement report matches the second positioning measurement report; and

performing positioning based on the first positioning measurement report and the second positioning measurement report.

29. A communication apparatus, comprising a module configured to perform the method according to any one of claims 1 to 8, a module configured to perform the method according to any one of claims 9 to 15, a module configured to perform the method according to any one of claims 16 to 22, or a module configured to perform the method according to any one of claims 23 to 28.

30. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 8, the method according to any one of claims 9 to 15, the method according to any one of claims 16 to 22, or the method according to any one of claims 23 to 28 through a logic circuit or by executing code instructions.

31. A computer-readable storage medium, wherein the storage medium stores a computer program or instructions, and when the computer program or the instructions are executed by a communication apparatus, the method according to any one of claims 1 to 8 is implemented, the method according to any one of claims 9 to 15 is implemented, the method according to any one of claims 16 to 22 is implemented, or the method according to any one of claims 23 to 28 is implemented.

FIG. 1

FIG. 2

FIG. 3

FIG. 4

FIG. 5

**First terminal device**

**601:** Determine first positioning measurement information and first information, where the first information indicates an association between at least one ARP on the first terminal device and at least one sidelink positioning reference signal sent via the at least one ARP

**602:** First positioning measurement information and first information

**Second terminal device**

**603:** Determine second positioning measurement information and second information, where the second information indicates an association between at least one ARP on the second terminal device and at least one sidelink positioning reference signal sent via the at least one ARP

**604:** Second positioning measurement information and second information

**LMF**

FIG. 6

FIG. 7

FIG. 8

Communication apparatus 900

Processing unit 910

Transceiver unit 920

FIG. 9

Communication apparatus 1000

Processor 1010

Interface circuit 1020

Memory 1030

FIG. 10

## INTERNATIONAL SEARCH REPORT

| International application No. |
|---|
| **PCT/CN2024/087079** |

| A. | CLASSIFICATION OF SUBJECT MATTER |
|---|---|

H04W 64/00(2009.01)i

According to International Patent Classification (IPC) or to both national classification and IPC

| B. | FIELDS SEARCHED |
|---|---|

Minimum documentation searched (classification system followed by classification symbols)

IPC:H04W,H04L,H04B

Documentation searched other than minimum documentation to the extent that such documents are included in the fields searched

Electronic data base consulted during the international search (name of data base and, where practicable, search terms used)

VEN, DWPI, 3GPP, ENTXT, CNTXT, ENTXTC: 报告, 编号, 标识, 标志, 参考信号时间差, 侧链路, 侧行, 定位, 定位参考信号, 矩阵, 列表, 旁链路, 三角定位法, 时间戳, 时隙, 天线参考点, 通知, 指示, 资源, 坐标, ARP, ID, PRS, RSTD, RTT, measurement, side link, reference, position, terminal, bypass, indication, notification, Time stamp

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2023004212 A1 (QUALCOMM INC.) 26 January 2023 (2023-01-26) description, paragraph [0015]-[0103], [0205]-[0312], and [0401]-[0433] | 1-31 |
| X | WO 2023284690 A1 (VIVO MOBILE COMMUNICATION CO., LTD.) 19 January 2023 (2023-01-19) description, paragraph [0004]-[0021], [0066]-[0205], [0211]-[0299], and [0390]-[0417] | 1-31 |
| A | WO 2022194226 A1 (VIVO MOBILE COMMUNICATION CO., LTD.) 22 September 2022 (2022-09-22) entire document | 1-31 |
| A | US 2022326337 A1 (ZTE CORP.) 13 October 2022 (2022-10-13) entire document | 1-31 |
| A | US 2023050521 A1 (QUALCOMM INC.) 16 February 2023 (2023-02-16) entire document | 1-31 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 July 2024** | **11 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 746 545 A1

| INTERNATIONAL SEARCH REPORT<br>Information on patent family members | | International application No.<br>**PCT/CN2024/087079** |
|---|---|---|

| Patent document<br>cited in search report | | | Publication date<br>(day/month/year) | Patent family member(s) | | | Publication date<br>(day/month/year) |
|---|---|---|---|---|---|---|---|
| WO | 2023004212 | A1 | 26 January 2023 | KR | 20240035800 | A | 18 March 2024 |
| | | | | TW | 202312776 | A | 16 March 2023 |
| | | | | EP | 4374623 | A1 | 29 May 2024 |
| | | | | CN | 117616833 | A | 27 February 2024 |
| | | | | IN | 202327078896 | A | 19 April 2024 |
| WO | 2023284690 | A1 | 19 January 2023 | EP | 4373177 | A1 | 22 May 2024 |
| | | | | US | 2024147414 | A1 | 02 May 2024 |
| | | | | CN | 115623584 | A | 17 January 2023 |
| WO | 2022194226 | A1 | 22 September 2022 | US | 2024007994 | A1 | 04 January 2024 |
| | | | | EP | 4311324 | A1 | 24 January 2024 |
| | | | | CN | 115119256 | A | 27 September 2022 |
| US | 2022326337 | A1 | 13 October 2022 | EP | 4070596 | A1 | 12 October 2022 |
| | | | | WO | 2022027670 | A1 | 10 February 2022 |
| | | | | CN | 116097117 | A | 09 May 2023 |
| US | 2023050521 | A1 | 16 February 2023 | EP | 4111765 | A1 | 04 January 2023 |
| | | | | KR | 20220143837 | A | 25 October 2022 |
| | | | | TW | 202133664 | A | 01 September 2021 |
| | | | | JP | 2023517499 | A | 26 April 2023 |
| | | | | BR | 112022016172 | A2 | 04 October 2022 |
| | | | | WO | 2021173213 | A1 | 02 September 2021 |
| | | | | IN | 202247038841 | A | 08 July 2022 |
| | | | | CN | 115136673 | A | 30 September 2022 |
| | | | | VN | 91063 | A | 25 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311012219